# EUROPEAN PATENT SPECIFICATION

(11) **EP 1 216 963 B1**
(45) Date of publication and mention of the grant of the patent: **11.10.2006**
(21) Application number: 01830757.9
(22) Date of filing: 11.12.2001
(51) Int. Cl.: C02F 3/32, C02F 103/32

(54) **Process of olive mill waste water phytodepuration and relative plant**
Verfahren und Anlage zur Phytoabwasserreinigung bei der Pressung von Oliven
Procede et dispositif pour la purification avec des plantes des effluents de la mouture d'olive

(30) Priority: 13.12.2000 IT TR000005
(43) Date of publication of application: 26.06.2002
(73) Proprietor: ISRIM S.C.a.r.l., 05100 Terni (IT)
(72) Inventor: Santori, Francesca, 05100 Terni (IT); Cicalini, Anna Rita, 01100 Viterbo (IT)

(56) References cited:
- EP-A- 0 330 626
- WO-A-00/28093
- WO-A-94/02418
- US-A- 4 839 051
- US-A- 5 337 516
- US-A- 5 947 041
- DUSHENKOV V ET AL: "RHIZOFILTRATION: THE USE OF PLANTS TO REMOVE HEAVY METALS FROM AQUEOUS STREAMS" ENVIRONMENTAL SCIENCE AND TECHNOLOGY, AMERICAN CHEMICAL SOCIETY. EASTON, PA, US, vol. 29, no. 5, 1 May 1995 (1995-05-01), pages 1239-1245, XP000505197 ISSN: 0013-936X

## Description

### Invention Field

The subject of this invention is a process of olive mill waste water phytodepuration and relative plant. The process, particularly, makes use of arboreous plants.

### State of the art

Among all different kinds of agroindustrial waste, the waste water from oilmills, owing to its acidity, to a significant contamination from phenolic compounds, to the presence of suspended substances and, most of all, to its high organic content (COD 30.000 - 150.000 mg/l), has the highest pollution rate. These features were decisive to determine the decision of forbidding direct dumping of the olive mill waste water into superficial waters, as it traditionally, instead, used to happen in the past. To make the situation worse, one must also consider the seasonal nature of the production (usually from november to february) and its high territorial fragmentation. The industry of olive oil extraction is constituted from a great multitude of small transformation plants, where costs due to olive mill waste water purification are not properly integrated in the business management. Up to today, many different methods have been used for olive mill waste water depuration. None of them, though, could completely solve all the related problems, being either not utterly effective in the abatement of polluting matter or too expensive or in need of stricly specialized workforce or presenting strong restrictions linked to considerable quantities of olive mill waste water. Analyzing separately some of the main processes for olive mill waste water purification the following limitations arise:
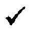 *Lagooning:* necessity of wide areas for the catch basins in which the olive mill waste water naturally degrades; bad smell and insects; risk of seepage and consequent pollution of the ground water table.
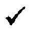 *Physical-chemistry* / *Aerobic-anaerobic Purification*: Biogas Production: generation of a black effluent, still containing 20% of the starting organic matter, it needs, therefore, of further expensive treatments. Centralized Biological Digestion (Activated Sludge): necessity of an investment for a plants oversizing, due to a high content of organic matter in the olive mill waste water; full running only in short periods of time, corresponding to the production of olive mill waste water.
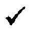 *Incineration:* high power consumption; greatly polluting for the atmosphere; absence of water and organic matter recycling.
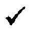 *Protein Biomass Production*: economic and managing problems due to discontinuity of the fermentating process; achievement of effluent presenting relevant antibiotic activity, therefore hardly degradable.
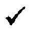 *Ultrafiltration and Inverse Osmosis*: rapid membrane exhaustion for the presence in the olive mill waste water of water proofing and water repellent agents.
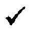 *Thermal Concentration*: achievement of polluting waters with low pH and high BOD; draining in rivers not allowed, consequent high cost for the process of evaporation.
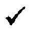 *Fertirrigation:* concentration of salts and increase of acidity in the soil; phytotoxic effect derived from the presence of a great quantity of phenols.

It clearly appears, then, how the problem of olive mill waste water depuration is pretty far from solution. All the methods described above present evident technical-economic and/or legal limits. Phytodepuration, intended as a process based on a guided and consociated development of peculiar vegetable species and microorganisms, can represent the appropriate solution, overtaking all the limits which make the overexposed procedures unsuitable. Easy plant design, low building and running cost, no need of specialized workforce, low enviromental impact and economic return, make phytodepuration a possibly useful tool in the resolution of the waste water problem. Up to today, phytodepuration plants were, effectively, used, almost only, in domestic or assimilable waste treatments (where assimilable waste, similarly to the domestic one, is characterized from low organic content and daily production). Phytodepuration plants developed for domestic waste can be divided between flow systems (superficial and subsuperficial) and wetlands (where water submerges or impregnates the soil surface for enough time, to mantain, every year, saturated soil conditions and relative vegetation). For this reason typical wetlands macrophytes plants were chosen (like Typha, Phragmites, Scirpus, Iris, etc).

Another different system consists of absorbing tanks, confined basins under the soil level where the bottom is made of inert layerdivided material presenting different layer granulometry, while cultured substrate forms the upper part. Mostly used are adult, not forest, usually evergreen trees like, for instance, Arundinaria (bamboo), Acuba, Calycantus, Cornus, Cotoneaster, Sambucus and Laurus. The above-mentioned structures are absolutely unfit for the treatment of olive mill waste water because its production, differently from the domestic one, is characterized by massive quantities in a very short and limited period of the year (from november to february), by a huge content of organic matter and by a phytotoxic damaging action.

### Detailed Description of the Invention

The present invention intends to give the olive oil industry a new system for the disposal of the olive mill waste water, which is effective, cheap, easily applicable in the countryside world, and that could also provide an economic return. The object of the invention is a process of olive mill waste water depuration which combines a metabolic activity of microorganisms, with the stimulation of the rhizospheric flora exercised from the root exudates of some plants, which resulted surprisingly fit for this particular task. This process can be executed in an absorbing tank plant, consisting in two separate sections, a draining one and a tree growing medium one. The process of phytodepuration, topic of this present invention, utilizes the natural mechanisms of microbial aerobic and anaerobic degradation, as well as the trees ability to stimulate, through the root exudates, the rhizospheric population, that is the microbial community which colonizes the soil area next to the roots. The process consists in a first olive mill waste water degradation, during its production from november to february, caused by microrganisms activity; the trees stay, at this time of the year, in a vegetative rest, and they coexist in this state with the waste. At the resumption of the vegetative functions of the trees, the waste will have been already partly degradated and will have put at their disposal, bioassimilable elements. These components can be utilized as nutrients also from the rhizospheric organisms (mycorrhizal included). Using plants coming from families resulting, in experimental procedures, unexpectedly resistant to the waste phytotoxic action, and showing, in its presence, a suitable physiological growth, the soil microbial population receives an indirect aimed stimulation. Degradation of organic and phenolic compounds and transformation in humificated matter and assimilable (from the plant) components are though achieved. This process works, as a whole, like an "open sky bioreactor", where the parameters inside are regulated from the trees, which behave as natural biosensors of the conditions below, as nutrients users and as "in continuo" stimulators of metabolic activity of the microorganisms.

The process of phytodepuration for olive mill waste water draining, topic of this present invention, can be executed in a plant containing one or more absorbing water proof tanks, each consisting of two separate sections, a draining one and a tree growing medium one:
- a lower section constituted by a draining layer, which takes up from 70% to 30% of the plant height, made of inert material (for example coarse gravel, flintstones or cobbles etc.) characterized by high macroporosity and optionally containing porous material (expanded clay, pumice, etc.). Inside this layer will find place a piping, designed following appropriate standards, determined by experts in the field, for homogeneous inflow and downflow of the olive mill waste water. Here the waste settles until the beginning of the following olive oil season, when new olive mill waste water will be introduced in the plant through the existing pipeline.
- an upper layer taking up from 70% to 30% of the plant height, made of local soil, appropriately mixed with manure, in case the cultivar needed it. On this substrate will be planted the trees in mono or diversified culture, according to the agronomic rules of the specific cultivation.

The plants unexpectedly proof against the waste toxic action and indispensable to the process of phytodepuration, topic of this present invention, were of the arboreous kind. In particular, they belong to the following Families: Betulaceae, Platanaceae, Magnoliaceae, Aceraceae, Mirtaceae, Yuglandaceae, Caprifoliaceae, Labiateae, Tiliaceae, Apocynaceae, Salicaceae, Pinaceae, Fagaceae and Cupressaceae. They can be either singly chosen or not. Among those families, the following ones showed high attitude of adaptability and good physiological growth in the presence of olive mill waste water: Salicaceae, Pinaceae, Fagaceae and Cupressaceae. In detail the more efficient genus for the process of phytodepuration are: Pinus, Quercus and Cupressus.

The olive mill waste water phytodepuration plant, topic of the present invention, will operate according to the following procedures. The plant, ad hoc planned, depending on demands and features of the single productive units, will receive the olive mill waste water in wintertime, during the olives miling season (from november to february). The waste will be flown to the draining layer of the plant through an hydraulic system, comprehending, if necessary, one or more sedimentations tanks (Imhoff wells). It will settle there for about a year, undergoing all those different aerobic and anaerobic processes, which will lead to its degradation and mineralization. During the rest of the year water and mineralized compounds will be absorbed from the trees that will use them for their own sustenance, while the organic matter will enrich the soil humificated portion. The plant could be equipped with small canals for rainwater collection and, in case the chosen trees presented a high degree of evapotranspiration, it would be appropriate to provide a suitable irrigation system. Description and/or report of the necessary elements and devices for the plant construction, like pumps, valves, piping, measuring etc., will be here omitted, for they surely are at the relative technical expert's reach.

The olive mill waste water phytodepuration plant at absorbing tanks, topic of this invention, presents the following benefits:
1. high disposal efficiency, even in wintertime (COD and phenols content demolition, pH and conductibility return to levels consistent with the plants life);
2. lack of bad smell and of infecting insects which, on the opposite, characterize systems like fertirrigation or lagooning and all the methods where the olive mill waste water lays in the open air;
3. zero or limited power consumption;
4. placing by the single oilmill, with chances of direct piping from the olivepressing plant to the phytodepuration system;
5. absence of waste transport and, consequently, of connected expensive and enviromental hazardous operations;
6. annual plant reutilization as a natural cyclic renewal;
7. no need of specialized workforce; only required common farming maintenance (land annual processings, prunings, soil irrigation, etc.);
8. low costs for plant building, running and maintenance;
9. economic return linked to trees production industry (ornamental plants, wood, fuel, etc.);
10. zero or limited mud production;
11. elimination of enviromental damage risks strictly connected with the uncontrolled waste spreading in the ground and/or different waterstreams;
12. low enviromental impact helped from the plant appearing as a specialized arboretum gifted with highly aestethic appearance;
13. increase of competitiveness of the italian oil in the international market thanks to lower olive mill waste water depuration costs.

The following examples are useful to explain the invention, not to reduce whatsoever its relative range.

### Example n°1

For this very first test two round plastic tanks, 30 cm. deep and 1m² area each, were prepared. On the bottom was placed a pipeline constituted by perforated PVC pipes, 2cm. diameter. The external piping exit was a hole on the tanks wall, at the height of 8 cm. from the bottom .

Subsequently agriperlite was chosen as draining material and 80 liters were introduced at the bottom; the same quantity of olive mill waste water, just produced in a three steps olives working plant, was then poured through the piping and everything was left 48 hours to settle and saturate completely the agriperlite.

At the end of this first step, the level of the draining layer, saturated from waste and water was measured using a rule; it was filling 40% of the tank volume.

Afterwards the upper layer, made of trees and substrate in cultivation, was prepared. A natural organic amendant, commercially available, was used; it was a specific mixture of yellow finely sieved peat and black vernalized peat, having pH (CaCl₂) between 5.5 and 6.0 and the following composition (dry weight percentage): organic carbon of biological origin (C) 35%, organic nitrogen (N) 0.4%, organic matter 42%. At this stage agriperlite was added on a ratio amendant/agriperlite 15/1 (V/V). Compounds were then manually mixed and used to complete the system filling, counting for the 60% of the total tank volume.

After this filling stage, three plants, belonging to Quercus Ilex genus, were put in every tank, and the whole system moved in the open air for monitoring, from november the 1^{st} to october the 31^{st} of the following year; periodical logs were executed to check chemical, physical-chemical and microbiological parameters, essential informations for valuating efficiency of the olive mill waste water degradation in the experimental plant.

In table 1 were reported pH, conductibility, COD and total phenols values coming from the lower layer measurements (agriperlite + water and agriperlite + olive mill waste water) at the test start (november) and after 6 months, 9 months, 1 year from the introduction of the olive mill waste water. The data analysis shows that pH and conductibility values of the draining layer, containing the olive mill waste water, go back, after 1 year, to display such results similar to the blank control; the total phenols content resulted, likewise, substantially diminished, reaching comparable values to the blank ones. The high degradation efficiency of the phytodepuration system is also confirmed from the COD demolition in the tank containing the olive mill waste water, that reached the same value displayed in the blank reference. It's noticeable how the COD value, in the reference tank, increased in the may log; part of the organic carbon present in the upper layer probably percolates in the layer below, increasing the basal value of the chemical oxygen demand.

| **TAB. 1** | ***november***** | | ***may*** | | ***july*** | | ***october*** | |
|---|---|---|---|---|---|---|---|---|
| | H₂O | AV | H₂O | AV | H₂O | AV | H₂O | AV |
| | | | | | | | | |
| | | | | | | | | |
| pH | 7,4 | 4,97 | 7,65 | 6,19 | 7,24 | 7,05 | 7,22 | 6,9 |
| Conductivity mS | 0,09 | 2,73 | 0,44 | 2,5 | 0,16 | 0,44 | 0,24 | 0,63 |
| COD mg/l | 109 | 167.000 | 6.800 | 7.200 | 8.920 | 6.720 | 5.264 | 5.151 |
| Total phenols mg/g* | 6,2 | 26,8 | 7,85 | 7,05 | N.R. | N.R. | N.R. | N.R. |

| | | | | | | | | |
|---|---|---|---|---|---|---|---|---|
| *A gram of dry weight from the analyzed sample. **Analysis were referred to mixture agriperlite+water and agriperlite+olive mill waste water, before construction of the upper layer. N.D. Not detectable. | | | | | | | | |

Quantitative and qualitative analysis on the biomass present in the lower layer of the tanks containing the olive mill waste water, showed that the waste, in the described conditions, acts stimulating the microflora, both on a quantitative scale (biomass increase) and on a qualitative stage (biodiversity increase). This phenomenon agrees with the experimental values achieved from the performed chemical analysis and, therefore, with the observed process of degradation.

On the opposite, the analysis executed on the upper layer of the same tanks, didn't point out any substantial difference in the chemical, physical and biological composition of the cultured substrate, between the tanks in which olive mill waste water was poured and the others.

The morphofunctional evaluation of the experimented trees didn't show significant changes in their growth and physiology, directly connected with the presence of the olive mill waste water.

### Example n°2

The experiment was carried out in the same conditions as described in example n°1, except in the choice of the plant genus. Plants of genus Populus were used, instead of those belonging to genus Quercus. Chemical and microbiological analysis on the lower layer of the tanks confirmed the same trend, already observed in the example above, showing a total phenols content and COD decrease in the olive mill waste water tank, similar pH and conductivity values in sample and control and a quantitative and qualitative increase in the microflora. As in example n°1, the morphofunctional evaluation of the experimented trees didn't show significant changes in their growth and physiology, directly connected with the presence of the olive mill waste water.

### Example n°3

The experiment was carried out in the same conditions as described in example n° 1, except in the choice of the plant genus. Plants of genus Cupressus were used, instead of those belonging to genus Quercus. Chemical and microbiological analysis on the lower layer of the tanks confirmed the same trend, already observed in the example n°1, showing a total phenols content and COD decrease in the olive mill waste water tank, similar pH and conductivity values in sample and control and a quantitative and qualitative increase in the microflora. As in example n°1, the morphofunctional evaluation of the experimented trees didn't show significant changes in their growth and physiology, directly connected with the presence of the olive mill waste water.

### Example n°4 (of comparison)

The experiment was carried out in the same conditions as described in example n°1, except in the choice of the plant genus. Plants of genus Laurus, from the particular species Laurus nobilis, were used, instead of those belonging to genus Quercus. This genus proved to be uneffective in the olive mill waste water phytodepuration plant, object of this invention; in spite of a good degradation of the waste polluting matter, demonstrated from chemical and microbiological analysis of the lower layer of the tanks, the trees belonging to this genus reacted negatively at the presence of the olive mill waste water. The morphofunctional evaluation of the experimented trees showed that:
- In the epigeal part: pollinic activity reduction; bud length shortening (≤50% compared to blank control) and decrease in number; necrotizing of the external part of the leaves; presence of the green part of the leaves only around the ribs; lack of reproductive activities.
- In the hypogeal part: presence of brown coloured roots of ligneous appearance, only developed in the upper layer of the tanks containing the olive mill waste water; absence of radical branches.

## Claims

1. Method of olive mill waste water depuration *comprising* the steps of:
providing a treatment zone consisting in a closed absorbing tray, made waterproof and divided in a bottom draining layer and an upper local soil layer and
planting arboreal plant resistant to olive mill waste water, belonging to the following Families: Betulaceae, Platanaceae, Magnoliaceae, Aceraceae, Mirtaceae, Yuglandaceae, Caprifoliaceae, Labiateae, Tiliaceae, Apocynaceae, Salicaceae, Pinaceae, Fagaceae, Cupressaceae and relative mixtures and
flowing the raw olive mill waste water to the draining layer and
allowing a two-stage, temporary and spatially separated, microbial anaerobic-aerobic process in which the *first stage* consists in an anaerobic degradation linked with the vegetative rest of said waste-resistant arboreal plants, and the *second stage* exploits a following aerobic degradation linked with the vegetative activity of said waste-resistant arboreal plants.

2. Method according to claims 1, in which the said waste-resistant arboreal plants are vegetable species belonging to the following genus: Salix, Populus, Pinus, Quercus and Cupressus.

## Patentansprüche

1. Verfahren zur Olivenölabwasserreinigung das die folgende Stufen umfasst:
dass eine geschlossene Behandlungszone geboten wird, die in einer Aufnahmewanne besteht, die wasserdicht gemacht wird, und in einer unteren Dränung-Schicht, die die Entwässerung ermöglicht, und in einer oberen Schicht, die aus örtlichen Erden besteht, geteilt ist, und
dass baumartige Pflanzen von zu Olivenölabwasser widerstandsfähigen der folgenden Familien gepflanzt werden: Betulaceae, Platanaceae, Magnoliaceae, Aceraceae, Mirtaceaea, Yuglandaceae, Caprifoliaceae, Labiateae, Tiliaceae, Apocynaceae, Salicaceae, Pinäceae, Fagaceae, Cupressaceaea, und entsprechende Zusammensetzungen, und
dass das Roh-Olivenölabwasser in der Dränung-Schicht gefliest wird, und dass ein zweistufiger, räumlich und zeitlich getrennter, mikrobiologischer anaerober-aerober Prozess gewähren wird, in dem bei der *ersten Stufe* eine anaeroben Degradierung, die durch die vegetative Ruhe der obengenannten abwasserwiderstandsfähigen Pflanzen erfolgt, und bei der *zweiten Stufe* eine folgende aerobe Degradierung stattfindet, die durch die vegetative Aktivität der obengenannten abwasserwiderstandsfähigen Pflanzen erfolgt.

2. Verfahren nach Anspruch 1, **dadurch gekennzeichnet, dass** die abwasserwiderstandfähigen baumartige Pflanzen, pflanzliche Arten der folgenden Gattung sind: Salix, Populus, Pinus, Quercus und Cupressus.

## Revendications

1. Procédé pour la dépuration des eaux résiduaires des moulins à huile comprenant les étapes suivantes:
se munir d'une zone de traitement consistant en un bassin fermé d'absorption, étanche et constitué par une couche inférieure drainante et par une couche supérieure de terre locale et
planter des plantes arborées résistant aux eaux résiduaires des moulins à huile, appartenant aux familles suivantes: Bétulacées, Platanacées, Magnoliacées, Acéracées, Myrtacées, Juglandacées, Caprifoliacées, Labiatées, Tiliacées, Apocynacées, Salicacées, Pinacées, Fagacées, Cupressacées et des mélanges relatifs et
introduire les eaux résiduaires des moulins à huile telles quelles dans la couche de drainage et
permettre en deux étapes, séparées dans le temps et l'espace, un processus microbien anaérobic-aérobic dans lequel la *première étape* consiste en une dégradation anaérobique pendant le repos végétatif des dites plantes arborées résistantes aux eaux résiduaires, et la *seconde étape* exploite une dégradation aérobique due à l'activité végétative des dites plantes arborées résistantes aux eaux résiduaires.

2. Procédé selon la revendication 1, dans laquelle les dites plantes arborées résistantes aux eaux résiduaires sont des espèces végétales appartenant aux genres suivants : Salix, Populus, Pinus, Quercus et Cupressus.
